# EUROPÄISCHE PATENTSCHRIFT

(11) **EP 1 230 275 B1**
(45) Veröffentlichungstag und Bekanntmachung des Hinweises auf die Patenterteilung: **17.06.2009**
(21) Anmeldenummer: 00960494.3
(22) Anmeldetag: 18.08.2000
(51) Int. Cl.: C08F 2/22, C09J 157/00

(54) **VERFAHREN ZUR HERSTELLUNG WÄSSRIGER POLYMERDISPERSIONEN**
VERFAHREN ZUR HERSTELLUNG WÄSSRIGER POLYMERDISPERSIONEN
PROCEDE DE PRODUCTION DE DISPERSIONS POLYMERES AQUEUSES

(30) Priorität: 19.08.1999 DE 19939325
(43) Veröffentlichungstag der Anmeldung: 14.08.2002
(73) Patentinhaber: BASF SE, 67056 Ludwigshafen (DE)
(72) Erfinder: GERST, Matthias, 67433 Neustadt (DE); AUCHTER, Gerhard, 67098 Bad Dürkheim (DE); SCHULER, Bernhard, 68199 Mannheim (DE)
(74) Vertreter: Kinzebach, Werner
(86) Internationale Anmeldenummer: PCT/EP2000/008100
(87) Internationale Veröffentlichungsnummer: WO 2001/014426

(56) Entgegenhaltungen:
- EP-A- 0 065 162
- EP-A- 0 644 205
- DE-A- 19 633 967
- US-A- 4 628 071

## Beschreibung

Die vorliegende Erfindung betrifft ein Verfahren zur Herstellung wässriger Polymerdispersionen, enthaltend wenigstens ein Copolymerisat CP in Form dispers verteilter Polymerteilchen, das aus ethylenisch ungesättigten Monomeren M aufgebaut ist. Die Erfindung betrifft auch die nach diesem Verfahren erhältlichen, wässrigen Polymerdispersionen und daraus hergestellte Polymerpulver. Die vorliegende Erfindung betrifft auch die Verwendung dieser Polymerdispersionen in Klebstoffzubereitungen, insbesondere in Haftklebstoffen.

Wässrige Polymerdispersionen finden in vielfältiger Weise Anwendung, beispielsweise als Beschichtungsmittel oder als Imprägnierung für Papier oder Leder, als Bindemittel in z.B. Dispersionsfarben, Spachtelmassen oder in kunstharzgebundenen Putzen, als Modifikatoren für mineralische Bindebaustoffe und als Klebstoffe oder Klebrohstoffe.

Bei Klebstoffen stellt sich grundsätzlich das Problem, dass für eine feste und formstabile Verklebung der Substrate eine gute Haftung des Klebstoffs auf dem zu verklebenden Substrat (Adhäsion) und gleichzeitig eine innere Festigkeit des Klebefilms (Kohäsion) gewährleistet sein muss. Adhäsion und Kohäsion sind im Allgemeinen nicht unabhängig voneinander optimierbar. Gewünscht sind Maßnahmen, die entweder das Niveau beider Eigenschaften anheben oder zumindest eine Eigenschaft unverändert erhalten, während sich die jeweils andere verbessert. Diese Problematik spielt insbesondere bei Haftklebstoffen eine Rolle.

Haftklebstoffe bilden einen bleibend klebrigen Film, der schon unter geringem Druck bei Raumtemperatur an den verschiedensten Oberflächen haftet (eng.: pressure sensitive adhesives (PSA)). Haftklebstoffe dienen zum Herstellen selbstklebender Erzeugnisse, wie Selbstklebeetiketten, -bänder oder -folien. Derartige Produkte lassen sich sehr einfach anwenden und ermöglichen ein schnelles Arbeiten beim Verkleben. Es sind im Gegensatz zu Kontaktklebemassen keine Ablüftzeiten erforderlich. Auch eine sog. "offene Zeit", innerhalb der die Verklebung ausgeführt werden muss, existiert nicht. Die Qualität eines selbstklebenden Artikels hängt im Wesentlichen davon ab, ob die innere Festigkeit (Kohäsion) und die Haftung des Klebstofffilms auf der zu beklebenden Oberfläche (Adhäsion) entsprechend der Anwendung aufeinander abgestimmt sind.

Insbesondere bei Haftklebestoffen für Etiketten muss die Kohäsion so groß sein, dass beim Stanzen und Schneiden kein Fadenziehen bzw. Kantenaustritt auftritt, da es sonst zu Verschmutzungen der Schneidewerkzeuge und zur Verklebung der Schnittflächen kommt. Gleichzeitig soll die Adhäsion auf einem hohen Niveau liegen, um eine gute Haftung auf dem zu beklebenden Substrat zu erreichen.

Aus der DE 196 33 967 ist ein Verfahren zur Herstellung hochkonzentrierter, wässriger Haftklebstoffdispersionen bekannt, bei dem die Polymerisation nach einem speziellen Zulaufverfahren in Gegenwart von weniger als 50 ppm Polymerisationsinhibitor durchgeführt wird.

Aus der DE 196 32 203 sind Haftklebstoffe bekannt, deren Adhäsion durch Anwesenheit geringer Mengen an einpolymerisiertem Styrol verbessert wird.

Aus der älteren Patentanmeldung DE 198 18 394.1 ist bekannt, dass in wässrigen Haftklebstoffzubereitungen auf Basis von wässrigen Polymerdispersionen das Verhältnis von Adhäsion zu Kohäsion durch Verwendung aromatischer Emulgatoren verbessert werden kann.

Die WO 97/12921 beschreibt ein Verfahren zur Herstellung wässriger Polymerdispersionen, bei dem auf eine Saatlatex eine Monomermischung aufpolymerisiert wird, die man während der Polymerisation ändert. Die nach diesem Verfahren hergestellten Polymere werden als Beschichtungsmittel eingesetzt. Die US 3,804,881 beschreibt ein ähnliches Verfahren, bei dem in Abwesenheit eines Saatlatex gearbeitet wird.

Der vorliegenden Erfindung lag die Aufgabe zugrunde, wässrige Polymerdispersionen bereitzustellen, die insbesondere als Klebstoffe oder Klebrohstoffe, d.h. als klebende Komponente in Klebstoffzubereitungen, geeignet sind. Die Klebstoffe bzw. Klebstoffzubereitungen sollen ein ausgewogenes Eigenschaftsprofil, d.h. eine gute Haftung des Klebstoffs auf den zu verklebenden Substraten bei einer zugleich hohen Festigkeit des Klebefilms, aufweisen.

Es wurde überraschenderweise gefunden, dass ein Verfahren zur Herstellung wässriger Polymerisatdispersionen nach der Methode der radikalischen, wässrigen Emulsionspolymerisation ethylenisch ungesättigter Monomere M, bei dem man die Rate, mit der man den Polymerisationsinitiator der Polymerisationsreaktion zuführt, mehrfach oder kontinuierlich verändert, zu wässrigen Polymerdispersionen mit verbesserten technischen Anwendungseigenschaften, insbesondere im Hinblick auf ihre Verwendung als Haftklebstoffe führt.

Demnach betrifft die vorliegende Erfindung ein Verfahren zur Herstellung einer wässrigen Polymerdispersion, eines Copolymerisats CP durch radikalische, wässrige Emulsionspolymerisation der Monomere M, umfassend wenigstens zwei voneinander verschiedene Monomere M1 und M2, in Gegenwart wenigstens eines Initiators, wobei wenigstens 80 % der Monomere M und wenigstens 75 % des Initiators der Polymerisationsreaktion in ihrem Verlauf kontinuierlich zugeführt werden, dadurch gekennzeichnet, dass man sowohl die Rate, mit der der Initiator der Polymerisationsreaktion zugeführt wird, als auch das Verhältnis der Monomere M1:M2 in den zugeführten Monomeren M mehrfach oder kontinuierlich während der Polymerisationsreaktion ändert, wobei die Monomere M
- 60 bis 99 Gew.-%, bezogen auf die Gesamtmonomermenge, wenigstens eines hydrophoben Monomeren M1, dessen Homopolymerisat eine Glasübergangstemperatur T_{g} ≦ 0°C aufweist, und
- 1 bis 40 Gew.-%, bezogen auf die Gesamtmonomermenge, wenigstens eines damit copolymerisierbaren Monomeren M2 umfassen, wobei das Monomere M2
   - 0,1 bis 10 Gew.-%, bezogen auf die Gesamtmonomermenge, wenigstens eines Monomers M2a mit einer Löslichkeit in Wasser ≥ 80 g/l (bei 25 °C) und
   - 0,9 bis 39,9 Gew.-%, bezogen auf die Gesamtmonomermenge, wenigstens eines hydrophoben Monomers M2b mit einer Glasübergangstemperatur T_{g} > 0 °C umfasst.

Als Monomere M kommen alle einfach oder mehrfach ethylenisch ungesättigten Monomere in Betracht, die für sich alleine oder in Kombination mit anderen Monomere nach der Methode einer radikalischen wässrigen Emulsionspolmyerisation polymerisiert werden können. Derartige Monomere sind dem Fachmann bekannt und umfassen Vinyl-, Allyl und Methallylester aliphatischer Carbonsäuren mit linearem oder verzweigtem Kohlenwasserstoffgerüst, Ester monoethylenisch ungesättigter Carbonsäuren mit Alkanolen oder Cycloalkanolen, Olefine, konjugierte Diene, vinylaromatische Verbindungen, ethylenisch ungesättigte Carbonsäuren, Sulfonsäuren, Phosphonsäure und funktionale monomere, z.B. Vernetzer und vernetzend wirkende Monomere.

In der Regel umfassen die Monomere M wenigstens ein und vorzugsweise wenigstens zwei hydrophobe Monomere. Unter hydrophoben Monomeren versteht man solche Monomere, deren Wasserlöslichkeit in der Regel unterhalb 80 g/l, vorzugsweise unterhalb 60 g/l bei 25 °C und 1 bar liegt. Die hydrophoben Monomere machen in der Regel wenigstens 60 Gew.-% und vorzugsweise wenigstens 70 Gew.-% der zu polymerisierenden Monomere aus.

Im Hinblick auf die Verwendung der erfindungsgemäßen Polymerdispersionen als Kleb- oder Klebrohstoffe hat es sich als vorteilhaft erwiesen, wenn die zu polymerisierenden Monomere wenigstens 60 Gew.-% und bis zu 99 Gew.-%, vorzugsweise 70 bis 98 Gew.-% und insbesondere 80 bis 95 Gew.-% wenigstens eines hydrophoben Monomers M1 umfassen, dessen Homopolymerisat eine Glasübergangstemperatur T_{g} ≤ 0 °C aufweist. Dementsprechend umfassen die Monomere M wenigstens 1 Gew.-% und bis zu 40 Gew.-%, vorzugsweise 2 bis 30 Gew.-% und insbesondere wenigstens 5 bis 20 Gew.-% Monomere M2, das mit den Monomeren M1 copolymerisierbar ist.

Unter der Glasübergangstemperatur T_{g} wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765). Ferner kann die Glasübergangstemperatur auch aus der Messung des E-Moduls im Kriechversuch als Funktion der Temperatur bestimmt werden. Glasübergangstemperaturen für die Homopolymerisate zahlreicher Monomere sind bekannt und z.B. in Ullmann's Encyclopedia of Industrial Chemistry, VCH, Weinheim, Vol. A 21 (1992) S. 169 oder in J. Brandrup, E.H. Immergut, Polymer Handbook 3rd ed, J. Wiley, New York 1989 zusammengestellt.

Erfindungsgemäße hydrophobe Monomere M1 sind solche mit einer begrenzten Wasserlöslichkeit, wie sie üblicherweise für die radikalische wässrige Emulsionspolymerisation eingesetzt werden. Übliche Monomere M1 sind ausgewählt unter den Vinylestern von C₃-C₁₈-Mono- carbonsäuren, wie Vinylpropionat, Vinylbutyrat, Vinylvalerat, Vinylhexanoat, Vinyl-2-ethylhexanoat, Vinyldecanoat, Vinyllaurat, Vinylstearat und Vinylester der Versatic-Säuren (Versatic-Säuren sind verzweigte, aliphatische Carbonsäuren mit 5 bis 11 C-Atomen). Typische Monomere M1 sind weiterhin die C₂-C₁₈-Alkylester und C₅-C₁₀-Cycloalkylester der Acrylsäure wie Acrylsäure-ethylester, Acrylsäure-n-propylester, Acrylsäure-isopropylester, Acrylsäure-n-butylester, Acrylsäure-1-hexylester, Acrylsäure-2-ethylhexylester, Acrylsäure-2-laurylester, Acrylsäure-2-stearylester, Acrylsäure-cyclopentylester, Acrylsäure-cyclohexylester, etc. Beispiele für Monomere M1 sind auch die C₁-C₁₀-Alkylester der Maleinsäure und der Fumarsäure wie Maleinsäuredimethylester, Maleinsäure-di-n-butylester und Fumarsäure-di-n-butylester. Zu den Monomeren M1 zählen auch konjugierte Diene mit vorzugsweise 4 bis 10 C-Atomen, wie 1,3-Butadien, Isopren oder Olefine mit vorzugsweise 2 bis 6 C-Atomen wie Ethylen, Propen, 1-Buten und isobuten. Bevorzugte Monomere M1 sind die C₂-C₁₀-Ester der Acrylsäure wie Ethylacrylat, n-Butylacrylat und 2-Ethylhexylacrylat.

Als Monomere M2 kommen alle diejenigen Monomere in Betracht, die unter den Bedingungen einer radikalischen, wässrigen Emulsionspolymerisation mit den Monomeren M1 copolymerisierbar sind. Zu den Monomeren M2 zählen wasserlösliche Monomere, deren Wasserlöslichkeit ≧ 80 g/l bei 25 °C und 1 bar beträgt (Monomere M2a). Die Monomere M2 umfassen weiterhin hydrophobe Monomere M2b, deren Homopolymerisate eine Glasübergangstemperatur > 0 °C aufweisen. Weiterhin können die Monomere M2 vernetzende Monomere M3 enthalten, d.h. Monomere mit wenigstens zwei nicht konjugierten ethylenisch ungesättigten Doppelbindungen, sowie vernetzbare Monomere, d.h. Monomere, die neben einer ethylenisch ungesättigten Doppelbindung eine weitere reaktive Funktionalität, beispielsweise eine Anhydridgruppe, eine Epoxidgruppe, eine Ketocarbonylgruppe oder eine Aldehydgruppe aufweisen (Monomere M4).

Vorzugsweise umfassen die Monomere M2 wenigstens ein Monomer M2a, vorzugsweise in einer Menge von 0,1 bis 10 Gew.-% und insbesondere in einer Menge von 0,2 bis 5 Gew.-%, bezogen auf die Gesamtmenge an Monomeren M, und wenigstens ein Monomer M2b, vorzugsweise in einer Menge von 0,9 bis 39,9 Gew.-%, insbesondere in einer Menge von 1 bis 30 Gew.-% und besonders bevorzugt in einer Menge von 5 bis 20 Gew.-%, bezogen auf die Monomere M.

Die Monomere M2a umfassen vorzugsweise wenigstens ein Monomer mit einer oder mehreren Säuregruppen, die im wässrigen Polymermedium durch eine Base deprotoniert werden können. Beispiele für geeignete Monomere M2a sind α,β-monoethylenisch ungesättigte Mono- und Dicarbonsäuren sowie monoethylenisch ungesättigte Sulfonsäuren, Phosphonsäuren oder Dihydrogenphosphate und deren wasserlösliche Salze, z.B. deren Alkalimetallsalze. Bevorzugte Monomere M2a sind α,β-monoethylenisch ungesättigte Monocarbonsäuren mit vorzugsweise 3 bis 10 C-Atomen, z.B. Acrylsäure, Methacrylsäure, Crotonsäure, vinylessigsäure, Acrylamidoglykolsäure, monoethylenisch ungesättigte Dicarbonsäuren mit vorzugsweise 4 bis 10 C-Atomen, z.B. Itaconsäure, und die Halbester monoethylenisch ungesättigter Dicarbonsäuren, z.B. Monomethylmaleinat und Monobutylmaleinat. Besonders bevorzugte Monomere mit einer Säurefunktion sind Acrylsäure und Methacrylsäure. Beispiele für Monomere mit einer Sulfonsäuregruppe sind Vinyl-, Allyl- und Methallylsulfonsäure sowie 2-Acrylamido-2-methylpropansulfonsäure bzw. deren Alkalimetallsalze. Anstelle oder zusammen mit den vorgenannten ethylenisch ungesättigten Carbonsäuren können auch deren Anhydride verwendet werden. Die genannten Monomere M2a machen erfindungsgemäß 0,05 bis 10 Gew.-%, vorzugsweise 0,05 bis 5 Gew.-% und insbesondere 0,05 bis 2 Gew.-%, bezogen auf das Gesamtgewicht der Monomere M aus.

Anstelle oder zusammen mit den Monomeren mit Säuregruppe können auch neutrale Monomere M2a mit einer erhöhten Wasserlöslichkeit eingesetzt werden. Zu den neutralen Monomeren M2a mit einer erhöhten Wasserlöslichkeit zählen beispielsweise die Amide und die N-Alkylolamide der ethylenisch ungesättigten Monocarbonsäuren wie Acrylamid, Methacrylamid, N-Methylolacrylamid und N-Methylolmethacrylamid. Hierzu zählen weiterhin die Hydroxyalkylester der vorgenannten monoethylenisch ungesättigten Mono- und Dicarbonsäuren wie Hydroxyethylacrylat, Hydroxyethylmethacrylat, 3-Hydroxypropylacrylat, 3-Hydroxypropylmethacrylat, 4-Hydroxybutylacrylat und 4-Hydroxybutylmethacrylat. Bevorzugte neutrale Monomere M2a sind die Hydroxyalkylester der monoethylenisch ungesättigten Monocarbonsäuren. Die neutralen Monomere M2a werden üblicherweise in einer Menge von 0,05 bis 10 Gew.-%, insbesondere in einer Menge von 0,1 bis 5 Gew.-%, bezogen auf die Monomere M, eingesetzt. Vorzugsweise umfassen die Monomere M2a wenigstens eine monoethylenisch ungesättigte Mono- oder Dicarbonsäure, vorzugsweise in einer Menge von 0,05 bis 2 Gew.-%, und wenigstens ein neutrales Monomer M2a, vorzugsweise in einer Menge von 0,05 bis 9,95 Gew.-%, insbesondere in einer Menge von 0,1 bis 5 Gew.-%, jeweils bezogen auf die Monomere M.

Zu den Monomeren M2b zählen Methylacrylat, Vinylacetat, vinylaromatische Monomere wie Styrol, α-Methylstyrol, o-, m- und p-Chlorstyrol, Vinyltoluole und p-tert.-Butylstyrol. Zu den Monomeren M2b zählen weiterhin tert.-Butylacrylat und C₁-C₄-Alkylester der Methacrylsäure wie Methylmethacrylat, Ethylmethacrylat, n- und iso-Propylmethacrylat, n-Butylmethacrylat, 2-Butylmethacrylat, iso-Butylmethacrylat und tert.-Butylmethacrylat. Bevorzugte Monomere M2b sind die vinylaromatischen Monomere, insbesondere Styrol, die C₁-C₄-Alkylester der Methacrylsäure, insbesondere Methylmethacrylat, und Methylacrylat.

Eine besonders bevorzugte Ausführungsform des erfindungsgemäßen Verfahrens und der danach hergestellten Polymerisatdispersionen betrifft solche Copolymerisate, worin die Monomere M2b wenigstens ein vinylaromatisches Monomer, vorzugsweise in einer Menge von 0,4 bis 20 Gew.-%, insbesondere in einer Menge von 0,5 bis 10 Gew.-% und besonders bevorzugt in einer Menge von 1 bis 5 Gew.-%, und wenigstens einen C₁-C₄-Alkylester der Methacrylsäure, insbesondere Methylmethacrylat, vorzugsweise in einer Menge von 0,5 bis 35,5 Gew.-%, insbesondere in einer Menge von 1 bis 20 Gew.-% und besonders bevorzugt in einer Menge von 4 bis 15 Gew.-%, jeweils bezogen auf die Gesamtmenge der Monomere M umfassen.

Vernetzbare Monomere M3 werden, sofern erwünscht, in untergeordneter Menge, d.h. in Mengen von 0,01 bis 2 Gew.-%, bezogen auf die jeweilige Gesamtmonomermenge M, verwendet. Hierbei handelt es sich vorzugsweise um Monomere, die zwei nicht-konjugierte, ethylenisch ungesättigte Bindungen aufweisen, z.B. die Diester zweiwertiger Alkohole mit α,β-monoethylenischen ungesättigten C₃-C₈-Carbonsäuren, z.B. Glykolbisacrylat oder Ester von α,β-ungesättigten Carbonsäuren mit Alkenolen, z.B. Bicyclodecenyl(meth)acrylat, ferner Divinylbenzol, N,N'-Divinylharnstoff, N,N'Divinylimidazolinon, Diallylphthalat etc. Vorzugsweise umfassen die Monomere M keine Monomere M3.

Beispiele für vernetzbare, bzw. bifunktionelle Monomere M4 sind ethylenisch ungesättigte Glycidylether und -ester, z.B. Vinyl-, Allyl- und Methallylglycidylether, Glycidylacrylat und -methacrylat, die Anhydride α,β-monoethylenisch ungesättigter Mono- und Dicarbonsäuren, die Diacetonylamide der obengenannten ethylenisch ungesättigten Carbonsäuren, z.B. Diaceton(meth)acrylamid, und die Ester der Acetylessigsäure mit den obengenannten Hydroxyalkylestern ethylenisch ungesättigter Carbonsäuren, z.B. Acetylacetoxyethyl(meth)acrylat. Diese Monomere können in den jeweiligen Monomermischungen in Mengen von 0,05 bis 9,9 Gew.-%, insbesondere in Mengen von 0,05 bis 5 Gew.-% enthalten sein. Monomere M4 ermöglichen die Nachvernetzung der erfindungsgemäßen Polymere P, beispielsweise mit polyfunktionellen Aminen, Hydraziden oder Alkoholen.

Weiterhin hat es sich als vorteilhaft erwiesen, wenn die Polymerteilchen des Copolymers CP in den erfindungsgemäßen Polymerdispersionen einen mittleren Teilchendurchmesser im Bereich von 50 bis 1000 nm aufweisen (bestimmt mittels Ultrazentrifuge oder durch Photonenkorrelationsspektroskopie; zur Teilchengrößenbestimmung siehe W. Mächtle, Angew. Makromolekulare Chemie 1984, Bd. 185, 1025-1039, W. Mächtle, ebenda, 1988, Bd. 162, 35-42). Bei Zubereitungen, mit hohen Feststoffgehalten, z.B. > 50 Gew.-%, bezogen auf das Gesamtgewicht der Zubereitung, ist es aus Gründen der Viskosität von Vorteil, wenn der gewichtsmittlere Teilchendurchmesser der Polymerteilchen in der Dispersion ≥ 100 nm ist. Der mittlere Teilchendurchmesser wird vorzugsweise 800 nm nicht überschreiten. Ferner hat es sich als günstig erwiesen, wenn die Teilchendurchmesser der individuellen Polymerteilchen über einen großen Bereich variieren, insbesondere die Größenverteilung zwei oder mehrere Maxima aufweist (Polymerdispersionen mit bi- oder polymodaler Polymerteilchengrößenverteilung). Maßnahmen zur Einstellung der Polymerteilchengrößenverteilung sind dem Fachmann bekannt (siehe beispielsweise EP-A 614 922 und dort genannte Druckschriften).

Der Feststoffgehalt der erfindungsgemäßen Polymerdispersionen liegt typischerweise im Bereich von 30 bis 75 Gew.-% und vorzugsweise im Bereich von 40 bis 70 Gew.-%. Für die erfindungsgemäße Verwendung ist es von Vorteil, wenn der Feststoffgehalt möglichst groß ist, d.h. wenigstens 50 Gew.-% beträgt.

Die Herstellung der erfindungsgemäßen, wässrigen Polymerdispersionen erfolgt durch radikalische, wässrige Emulsionspolymerisation nach einem Zulaufverfahren in Gegenwart wenigstens eines, die radikalische Polymerisation der Monomere M auslösenden Initiators und oberflächenaktiver Substanzen. Der Begriff Zulaufverfahren bedeutet, dass wenigstens 80 %, vorzugsweise wenigstens 90 % und insbesondere wenigstens 95 % der zu polymerisierenden Monomere der Polymerisationsreaktion unter Polymerisationsbedingungen zugeführt werden. Entsprechend führt man wenigstens 75 %, vorzugsweise wenigstens 80 % des Initiators der Polymerisationsreaktion unter Polymerisationsbedingungen zu.

Dementsprechend befinden sich weniger als 20 %, vorzugsweise weniger als 10 % und insbesondere weniger als 5 % der zu polymerisierenden Monomere vor Beginn der Polymerisation im Polymerisationsgefäß. Vor Beginn der Polymerisation enthält das Polymerisationsgefäß in der Regel Wasser, gegebenenfalls ein Saatpolymer und gegebenenfalls oberflächenaktive Substanzen sowie gegebenenfalls einen Teil der zu polymerisierenden Monomere und Initiator. Vorzugsweise enthält die Vorlage keine Monomere.

Erfindungsgemäß enthält die Vorlage vor Beginn der Polymerisationsreaktion nicht mehr als 25 %, vorzugsweise nicht mehr als 20 % der für die Polymerisation insgesamt eingesetzten Initiatormenge.

Häufig wird man der Polymerisation in einer ersten Initiierungsphase, die in der Regel nicht mehr als 1/10 der Gesamtdauer der Polymerisation ausmacht, bis zu 25 %, vorzugsweise nicht mehr als 20 %, insbesondere etwa 1 bis 20 %, besonders bevorzugt 5 bis 15 % der Gesamtmenge an Initiator zusetzen. Diese Initiatorzugabe kann vor oder während des Aufheizens der Vorlage auf Polymerisationstemperatur oder zu der bei Reaktionstemperatur befindlichen Vorlage erfolgen. Vorzugsweise gibt man den Initiator in die bei Polymerisationstemperatur befindliche Vorlage. In dieser ersten Initiierungsphase kann man auch bis zu 20 % der zu polymerisierenden Monomermenge, z. B. 0,01 bis 20 Gew.-%, vorzugsweise 0;02 bis 10, insbesondere 0,1 bis 5 Gew.-% in einer oder mehreren Portionen oder kontinuierlich dem Polymerisationsreaktor zuführen (= Anpolymerisationsphase), wobei man die Monomere vor, während oder nach der Zugabe der für die Initiierungsphase erforderlichen Initiatormenge zugeben kann.

Erfindungsgemäß wird die Rate der Initiatorzufuhr, d.h. die Geschwindigkeit mit der der Initiator der Polymerisationsreaktion zugeführt wird, nach der Initiierungsphase während der verbleibenden Zeit der Polymerisationsreaktion mehrfach, d.h. wenigstens zweimal, vorzugsweise wenigstens dreimal, insbesondere wenigstens fünfmal oder ganz besonders bevorzugt kontinuierlich im Verlauf der Polymerisationsreaktion geändert.

Vorzugsweise ändert man die Zugaberate so, dass die Änderung entweder zu einer kontinuierlichen Zunahme oder einer kontinuierlichen Abnahme der Zugaberate führt. Ebenfalls kann man die Rate der Initiatorzugabe zunächst steigern und anschließend verlangsamen. Man kann auch, beginnend mit einer hohen Zugaberate, diese zunächst im Verlauf der Zugabe verringern und anschließend wieder steigern.

Die Zugaberate des Initiators kann in Intervallen geändert werden, wobei innerhalb dieser Intervalle die Zugaberate näherungsweise konstant bleibt. Sie kann auch kontinuierlich während der Zugabe verändert werden.

Unter Änderungen der Initiatorzugaberate versteht man erfindungsgemäß gezielte Änderungen und keine unkontrollierten Schwankungen, die sich in Abweichungen der aktuellen Zugaberate von der mittleren Zugaberate von weniger als 5 % bemerkbar machen.

In der Regel wird der Maximalwert der Zugaberate um einen Betrag von wenigstens 10 %, vorzugsweise wenigstens 25 %, insbesondere wenigstens 40 % und ganz besonders bevorzugt wenigstens 50 %, bezogen auf die durchschnittliche, d. h. die über den Zeitverlauf nach Beendigung der Initiierungsphase gemittelte Initiatorzugaberate, von dieser mittleren Zugaberate abweichen. Entsprechendes gilt für den Minimalwert der Zugaberate.

Besonders bevorzugt wird man, gegebenenfalls nach der Initiierungsphase, wenn diese vorgesehen ist, mit einer niedrigen Initiatorzugaberate beginnen und diese dann im Verlauf der Polymerisationsreaktion steigern. Vorzugsweise nimmt die Rate der Initiatorzugabe gegen Ende der Initiatorzugabe wenigstens den doppelten Wert an, den sie bei Beginn der Initiatorzugabe hatte. Insbesondere steigt der Wert der Initiatorzugaberate auf wenigstens das 4-fache, besonders bevorzugt auf wenigstens das 8-fache und ganz besonders bevorzugt auf wenigstens das 12-fache des Anfangswertes an.

Vorzugsweise erfolgt die Initiatorzugabe nach der Initiierungsphase, wenn diese vorgesehen ist, parallel zu der Zugabe der Monomere, d.h. die Initiatorzugabe wird nahezu zeitgleich mit der Monomerzugabe gestartet und beendet.

Der Polymerisationinitiator wird vorzugsweise als verdünnte, wässrige Lösung der Polymerisationsreaktion zugeführt. Vorzugsweise enthält diese Initiatorlösung weniger als 25 Gew.-%, z. B. 1 bis 20 Gew.-%, vorzugsweise 1 bis 10 Gew.-% Initiator, bezogen auf das Gesamtgewicht der Initiatorlösung.

Die zu polymerisierenden Monomere können in Substanz oder als wässrige Emulsion, die vorzugsweise eine oberflächenaktive Verbindung enthält zugegeben werden. Die Zugabe der Monomeren M erfolgt vorzugsweise in Form einer wässrigen Emulsion, die wenigstens eine oberflächenaktive Substanzen enthält. Die Zugabe der Monomere M erfolgt vorzugsweise mit einer nahezu konstanten Zugaberate, bezogen auf die im Zeitintervall zugegebene Gesamtmonomermenge. Dies bedeutet, dass die Rate mit der die Monomere M der Polymerisationsreaktion zugeführt werden, weniger als 20 % vom Anfangswert und vorzugsweise weniger als 10 %, insbesondere weniger als 5 % von der mittleren, d. h. über den gesamten Zugabezeitraum (gegebenenfalls nach einer Initiierungsphase, wenn vorgesehen) abweicht.

In einer bevorzugten Ausführungsform der vorliegenden Erfindung ändert sich die Zusammensetzung der zugeführten Monomere während ihrer Zugabe. Dazu geht man in der Regel so vor, dass der Anteil einer Monomersorte im Verhältnis zu den Anteilen der übrigen Monomersorten in der zugeführten Monomermischung während der Zugabe zunimmt oder abnimmt. Die Zunahme oder Abnahme kann dabei intervallweise erfolgen, wobei das Verhältnis der in der Monomermischung M enthaltenen Monomere innerhalb dieser Intervalle nahezu konstant bleibt. Die Änderung kann aber auch kontinuierlich erfolgen.

Erfindungsgemäß bevorzugt hält man die Rate, mit der die Monomere M1 der Polymerisationsreaktion zugeführt werden, während der Polymerisationsreaktion näherungsweise konstant. Sofern die Monomere M2 zwei verschiedene Monomere, beispielsweise ein Monomer M2a und wenigstens ein Monomer M2b, umfassen, ändert man vorzugsweise nur das Verhältnis der Monomere M2a/M2b im Verlaufe der Polymerisationsreaktion. Hierzu kann man so vorgehen, dass zu Beginn der Polymerisationsreaktion eine der Monomersorten in der zugeführten Monomermischung vollständig oder nahezu vollständig fehlt und gegen Ende der Polymerisationsreaktion einen maximalen Anteil erreicht. Man kann auch so vorgehen, dass diese Monomersorte zu Beginn der Polymerisationsreaktion in den zugeführten Monomeren einen maximalen Anteil hat, der im Verlauf der Polymerisationsreaktion bis zu ihrem Ende auf einen Wert von Null oder nahe Null absinkt.

Sofern die zu polymerisierenden Monomere M wenigstens ein Monomer M2a mit einer Säurefunktion, beispielsweise eine monoethylenisch ungesättigte Mono- oder Dicarbonsäure umfassen, hat es sich bewährt, wenn der Anteil der Carbonsäure in den zugeführten Monomeren zu Beginn der Polymerisationsreaktion einen maximalen Anteil hat, der während der Polymerisationsreaktion absinkt. Dies gilt insbesondere, wenn es sich bei der zugeführten Carbonsäure um Acrylsäure oder Methacrylsäure handelt.

Die Änderung der Monomerzusammensetzung der zugeführten Monomere M kann in unterschiedlicher Weise realisiert werden. Eine besonders einfache Methode ist die Zufuhr über wenigstens zwei getrennte Monomerzuläufe mit unterschiedlicher Zusammensetzung. Hierbei wird in der Regel die Zugaberate des einen Monomerzulaufs während der Polymerisationsreaktion mehrfach oder kontinuierlich gesteigert, wohingegen die Zulaufrate des anderen Monomerzulaufs während der Monomerzugabe kontinuierlich verringert wird. Vorzugsweise unterscheiden sich die beiden Monomerzuläufe nur in einer oder zwei Monomersorten dergestalt, dass die eine oder die andere Monomersorte in dem einen Monomerzulauf fehlt. Diese Methode hat sich insbesondere dann bewährt, wenn die Monomere als wässrige Monomeremulsion zugeführt werden sollen. Sofern der zweite Monomerzulauf nur einen geringen Anteil der zuzuführenden Monomere M enthält, kann man auch den ersten Monomerzulauf mit konstanter Zugaberate fahren und lediglich die Zugaberate des zweiten Monomerzulaufs in der gewünschten Weise ändern.

Nach einer anderen Methode bedient man sich eines Zulaufgefäßes aus dem kontinuierlich eine bestimmte Menge der zu polymerisierenden Monomer der Polymerisationsreaktion zugeführt werden. Zu beginn der Polymerisation enthält dieses Voratsgefäß eine oder mehrere Monomersorten (Monomere M'). Während der Zugabe der Monomere M' wird kontinuierlich oder in Portionen eine oder mehrere, andere Monomersorten (Monomere M") in das Zugabegefäß unter Druchmischung mit den Monomeren M' eingetragen. Hierdurch erreicht man eine kontinuierliche oder intervallweise Zunahme des Anteils der zugegebenen Monomersorten M", bezogen auf die bereits zu Beginn der Polymerisationsreaktion im Zulaufgefäß befindlichen Monomersorten M'.

Die beiden vorgenannten Methoden haben sich insbesondere dann bewährt, wenn die Monomersorte, deren Anteil geändert werden soll, nur einen geringen Anteil bezogen auf die Gesamtmonomerzusammensetzung ausmacht.

Ein besonders elegantes Verfahren ist die sogenannte Inline-Mischung. Hierbei erfolgt die Abmischung der Monomere in dem jeweils gewünschten Monomerverhältnis kurz vor ihrer Zufuhr in den Polymerisationsreaktor. Diese Methode hat sich auch dann bewährt, wenn die Monomere in Form einer wässrigen Monomeremulsion der Polymerisationsreaktion zugeführt werden. Hierbei ist es erforderlich, dass die zu polymerisierenden Monomere in dem jeweils gewünschten Mengenverhältnis kurz vor der Zufuhr in den Reaktor in der wässrigen Phase emulgiert werden (sog. Inline-Emulgierung). Verfahren zur Inline-Emulgierung sind aus dem Stand der Technik, z.B. aus der WO 98/23650 bekannt. Die Inline-Emulgierung erfolgt dabei in der Regel durch Vermischen des Wassers, der oberflächenaktiven Substanz und der zu polymerisierenden Monomere M zu einer Emulsion in einer üblichen Mischvorrichtung. Derartige Mischvorrichtungen umfassen in der Regel einen dynamischen und/oder einen statischen Mischer. Bevorzugte Mischer sind sogenannte Inline-Mischer, insbesondere Rohrdurchlaufmischer, Zahnkranzdispergiermaschinen, die gegebenenfalls in Kombination mit einem statischen Mischer verwendet werden. Die Zufuhr der Komponenten in den Mischer erfolgt in der Regel über getrennte Zuläufe, die mit Dosierventilen ausgestattet sind, was eine einfache Einstellung der Zusammensetzung des Monomerzulaufs ermöglicht. Wegen weiterer Details zu Mischern für die Inline-Emulgierung sei hiermit auf die Offenbarung der WO 98/23650 verwiesen.

Als radikalische Polymerisationsinitiatoren kommen grundsätzlich sowohl anorganische Peroxide und Hydroperoxide, z.B. Wasserstoffperoxid, Peroxodisulfate wie Natriumperoxodisulfat, Ammoniumperoxodisulfat, sowie organische Peroxide oder Hydroperoxide, z.B. tert.-Butylhydroperoxid als auch Azoverbindungen in Betracht. Bevorzugte Initiatoren sind Natriumperoxodisulfat oder Ammoniumperoxodisulfat. Bevorzugt sind weiterhin Redoxinitiatorsysteme, die aus wenigstens einem organischen Reduktionsmittel und wenigstens einem Peroxid und/oder Hydroperoxid zusammengesetzt sind. Beispiele hierfür sind Kombinationen aus tert.-Butylhydroperoxid mit Ascorbinsäure oder mit wenigstens einer Schwefelverbindung, z.B. das Natriumsalz der Hydroxymethansulfinsäure, Natriumsulfit, Natriumdisulfit, Natriumthiosulfat oder Acetonbisulfit-Addukt; oder Kombinationen aus Wasserstoffperoxid mit Ascorbinsäure oder mit wenigstens einer der vorgenannten Schwefelverbindungen. Die Redoxinitiatorsysteme können weiterhin eine geringe Menge einer im Polymerisationsmedium löslichen Metallverbindung enthalten, deren metallische Komponente in mehreren Wertigkeitsstufen auftreten kann, Eisen(II)sulfat gegebenenfalls zusammen mit EDTA, Vanadiumsalze etc. Vorzugsweise beträgt die Menge der eingesetzten radikalischen Initiatorsysteme, bezogen auf die Gesamtmenge der zu polymerisierenden Monomere, 0,1 bis 5 Gew.-%.

Gegebenenfalls setzt man bei der Polymerisation solche Substanzen ein, die das Molekulargewicht der Polymerisate erniedrigen. Derartige Substanzen werden in der Regel in Mengen bis zu 1 Gew.-%, bezogen auf die Monomere M, eingesetzt. Vorzugsweise werden die Molekulargewichtsregler, sofern erwünscht, in einer Menge von 0,01 bis 0,5 Gew.-%, bezogen auf die Monomere M eingesetzt. Sie werden in der Regel während der Polymerisation der Polymerisationsreaktion zugeführt, z.B. über einen separaten Zulauf als Reglerlösung oder in den zugeführten Monomeren. Beispiele für Molekulargewichtsregler sind organische Schwefelverbindungen, Silane, halogenierte Kohlenwasserstoffe, Allylalkohole und Aldehyde. Bevorzugte Molekulargewichtsregler sind solche mit einer Thiolgruppe z.B. Thiolglycolsäure, Thiolglycolsäurealkylester, Mercaptoethanol und lineare oder verzweigte Alkylmercaptane wie tert.-Butylmercaptan und tert.-Dodecylmercaptan.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,1 bis 5 Gew.-% und insbesondere 0,5 bis 4 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Bevorzugt wird wenigstens ein anionischer Emulgator, gegebenenfalls in Kombination mit einem nichtionischen Emulgator verwendet.

Zu den anionischen Emulgatoren zählen Alkali- und Ammoniumsalze von Alkylsulfaten (Alkylrest: C₈-C₁₂), von Dialkylestern der Sulfobernsteinsäure (Alkylrest: C₄-C₁₀), von Schwefelsäurehalbestern ethoxylierter Alkanole (EO-Grad: 2 bis 50, Alkylrest: C₁₂ bis C₁₈) und ethoxylierter Alkylphenole (EO-Grad: 3 bis 50, Alkylrest: C₄-C₁₀), von Alkylsulfonsäuren (Alkylrest: C₁₂-C₁₈) und von Alkylarylsulfonsäuren (Alkylrest : C₉ bis C₁₈). Zu den anionischen grenzflächenaktiven Substanzen zählen auch Mono- und Dialkylderivate von Sulfonylphenoxybenzolsulfonsäure-Salzen, insbesondere von deren Natrium-, Kalium- oder Calciumsalzen. Die Alkylgruppen in diesen Verbindungen weisen in der Regel 6 bis 18 und insbesondere 6, 12 oder 16 C-Atome auf. Häufig werden technische Gemische verwendet, die einen Anteil von 50 bis 90 Gew.-% des monoalkylierten Produktes aufweisen. Diese Verbindungen sind allgemein bekannt, z.B. aus der US-A-4,269,749, und im Handel erhältlich, beispielsweise als Dowfax® 2A1 (Warenzeichen der Dow Chemical Company).

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₉), Ethoxylate langkettiger Alkohole (EO-Grad: 3 bis 50, Alkylrest: C₈-C₃₆), sowie Polyethylenoxid/Polypropylenoxid-Blockcopolymere. Bevorzugt werden Ethoxylate langkettiger Alkanole (Alkylrest: C₁₀-C₂₂, mittlerer Ethoxylierungsgrad: 3 bis 50) und darunter besonders bevorzugt solche auf Basis von Oxoalkoholen und nativen Alkoholen mit einem linearen oder verzweigten C₁₂-C₁₈-Alkylrest und einem Ethoxilierungsgrad von 8 bis 50.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Bevorzugt umfassen die für die Herstellung der erfindungsgemäßen Polymerdispersionen verwendeten oberflächenaktiven Substanzen wenigstens einen anionischen Emulgator. Für die Stabilität der erfindungsgemäßen Polymerdispersionen, insbesondere gegenüber mechanischen Belastungen wie Scherkräften, hat es sich als vorteilhaft erwiesen, wenn bei der Herstellung der erfindungsgemäßen Dispersionen wenigstens ein Salz eines Dialkylesters der Sulfobernsteinsäure (linearer oder verzweigter C₄-C₁₀- und insbesondere C₈-Alkylrest), vorzugsweise ein Alkalimetallsalz und insbesondere das Natriumsalz eingesetzt wird, oder ein solches Salz im Anschluss an die Polymerisationsreaktion der fertigen Polymerdispersion zugesetzt wird.

Das Polymerisationsmedium kann sowohl nur aus Wasser, als auch aus Mischungen aus Wasser und damit mischbaren organischen Flüssigkeiten, wie Methanol, Ethanol, n-Propanol, iso-Propanol, n-Butanol, tert.-Butanol, Tetrahydrofuran, Formamid, Dimethylformamid, bestehen, wobei der Anteil dieser Flüssigkeiten, bezogen auf das Polymerisationsmedium üblicherweise weniger als 10 Gew.-% ausmacht. Vorzugsweise wird nur Wasser als Polymerisationsmedium verwendet.

Neben der saatfreien Herstellungsweise kann zur Einstellung einer definierten Polymerteilchengröße die Emulsionspolymerisation nach dem Saatlatex-Verfahren oder in Gegenwart von in situ hergestelltem Saatlatex erfolgen. Verfahren hierzu sind bekannt und können dem Stand der Technik entnommen werden (siehe EP-B 40 419, EP-A-614 922, EP-A-567 812 und dort zitierte Literatur sowie 'Encyclopedia of Polymer Science and Technology', Vol. 5, John Wiley & Sons Inc., New York 1966, S. 847).

Bei dem Saatlatex-Verfahren wird die Polymerisation üblicherweise in Anwesenheit von 0,001 bis 3 Gew.-% und insbesondere 0,01 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Latex weist in der Regel eine gewichtsmittlere Teilchengröße von 10 bis 300 nm und insbesondere 20 bis 150 nm auf. Seine konstituierenden Monomere sind in der Regel Monomere M2, beispielsweise Styrol, Methylmethacrylat, n-Butylacrylat und Mischungen davon, wobei der Saatlatex in untergeordnetem Maße auch Monomere M1 und/oder M3, vorzugsweise weniger als 10 Gew.-%, bezogen auf das Gesamtgewicht der Polymerisatteilchen im Saatlatex, einpolymerisiert enthalten kann.

Vorzugsweise arbeitet man in Anwesenheit wenigstens eines Saatlatex oder stellt diesen durch Polymerisation eines Teils der Monomere M, z. B. 0,01 bis 20 %, vorzugsweise 0,02 bis 10 % in der Initiierungsphase (bzw. Anpolymerisationsphase) der Polymerisation her (sogenannte in situ-Saatfahrweise).

Eine Initiierungsphase durch Zugabe eines Teils der Initiatormenge in der oben beschriebenen Weise kann selbstverständlich auch in Anwesenheit eines separat hergestellten Saatlatex mit oder ohne Zugabe zusätzlicher Monomere M durchgeführt werden. Häufig gibt man als Initiierungsphase eine Teil des Initiators zu dem in der Vorlage befindlichen Saatlatex.

Zur Entfernung der Restmonomere wird üblicherweise im Anschluss an die letzte Polymerisationsstufe eine Desodorierung auf physikalischem Wege, z.B. durch Abdestillieren der flüchtigen Monomere mit Wasserdampf, oder auf chemischem Wege durchgeführt. Bei der chemischen Desodorierung wird nach Ende der eigentlichen Emulsionspolymerisation, d.h. nach einem Umsatz der Monomeren von mindestens 95 %, oder nachdem der Restmonomergehalt durch physikalische Desodorierung auf einen Wert < 5 Gew.-% abgesenkt wurde, weiterer Initiator, z.B. ein Redoxinitiator zugesetzt.

Es wurde überraschenderweise gefunden, dass das erfindungsgemäße Verfahren d.h. eine Änderung der Rate, mit der der Initiator der Polymerisationsreaktion zugeführt wird, bei den erhaltenen Polymeren zu eine Verbreiterung der Molekulargewichtsverteilung und damit zu einer erhöhten Polydispersität M̅_{W}/M̅_{N} führt. Die Polydispersität M̅_{W}/M̅_{N} spiegelt die Molekulargewichtsverteilung der Polymerketten wider und wird Üblicherweise als das Verhältnis von gewichtsmittlerem Molekulargewicht M̅_{W} zu zahlenmittlerem Molekulargewicht M̅_{N} definiert. Die Molekulargewichtsverteilung kann durch das bekannte Verfahren der Gelpermeationschromatographie (GPC), das in den Beispielen beschrieben wird, bestimmt werden. Die Molekulargewichtsverteilung der nach dem erfindungsgemäßen Verfahren erhältlichen Polymere ist in der Regel durch eine Polydispersität oberhalb 35 charakterisiert.

Die erfindungsgemäßen Polymerdispersionen sind beispielsweise als Dichtungs- oder Beschichtungsmassen, als Bindemittel für Dispersionsfarben oder kunstharzgebundene Putze, zur Modifizierung mineralischer Bindebaustoffe, wie Beton, Lehm oder Ton, zur Behandlung von Leder oder Textilien, zur Verfestigung von Faservliesstoffen, insbesondere als Klebstoffe sowie als Klebotoffkomponente, d.h. als Klebrohstoff, für Klebstoffzubereitungen, insbesondere für wässrige Klebstoffzubereitungen, z. B. in Bauklebern, wie Teppich- oder Fliesenklebern, Haftklebstoffen und sonstigen Klebstoffzubereitungen auf Basis wässriger Polymerdispersionen geeignet. So zeichnen sich die erfindungsgemäßen Polymerdispersionen durch ein ausgewogenes Verhältnis von Haftung des Klebstoffs auf dem zu verklebenden Substrat und innerer Festigkeit des Klebefilms aus. Dieses Eigenschaftsprofil macht die erfindungsgemäßen Polymerdispersionen besonders geeignet als Haftklebstoffe bzw. als Klebrohstoffe für Haftkleber. Demnach betrifft die vorliegende Erfindung auch die Verwendung der erfindungsgemäßen wässrigen Polymerdispersionen als Klebstoffe und Klebrohstoffe, insbesondere als Haftklebstoffe.

Die erfindungsgemäßen Polymerisatdispersionen können als solche oder nach Konfektionierung mit üblichen Hilfsstoffen eingesetzt werden. Übliche Hilfsstoffe sind beispielsweise Netzmittel, Verdicker, Entschäumer, Weichmacher, Pigmente, Füllstoffe, schutzkolloide, Lichtschutzstabilisatoren und Biozide.

Bei Verwendung als Haftklebstoffe können den erfindungsgemäßen Polymerdispersionen als Hilfstoffe auch Tackifier, d.h. klebrigmachende Harze zugesetzt werden. Tackifier sind beispielsweise aus Adhesives Age July 1987, S. 19-23, oder Polym. mater. Sci. Eng. 61, 1989, S. 588 bis 592 bekannt. Beispiele für Tackifier sind Kollophoniumharze und ihre Derivate. Die Kollophoniumharze können beispielsweise in ihrer Salzform oder vorzugsweise in veresterter Form eingesetzt werden. Weitere Beispiele für Tackifier sind Kohlenwasserstoffharze, z.B. Cumaronharze, Polyterpenharze, Indenharze sowie Rohlenwasserstoffharze auf Basis von ungesättigten Kohlenwasserstoffen wie Butadien, Penten, Methylbuten, Isopren, Piperylen, Divinylmethan, Cyclopenten, Cyclopentadien, Cyclohexen, Cyclohexadien, Styrol oder Vinyltoluol. Geeignete Takkifier sind auch niedermolekulare Polymere von Alkylestern der Acrylsäure und/oder der Methacrylsäure, die in der Regel ein gewichtsmittleres Molekulargewicht unterhalb 30.000 aufweisen und zu wenigstens 60 Gew.-%, insbesondere wenigstens 80 Gew.-% aus Alkyl(meth)acrylaten aufgebaut sind. Bevorzugte Tackifier sind natürliche oder chemisch modifizierte Kollophoniumharze. Sie bestehen überwiegend aus Abietinsäure oder deren Derivaten.

Sofern erwünscht, werden die Tackifier in Mengen bis 100 Gew.-%, vorzugsweise 5 bis 50 Gew.-% bezogen auf das erfindungsgemäße Stufenpolymer in der Klebstoffzubereitung eingesetzt. Die erfindungsgemäßen Dispersionen zeichnen sich dadurch aus, dass sie auch ohne Tackifier eingesetzt werden können.

Die erfindungsgemäßen Polymerisatdispersionen können auch nach bekannten Verfahren des Standes der Technik zu Polymerpulvern getrocknet werden.

Die Haftklebstoffzubereitungen können durch übliche Methoden, z.B. durch Rollen, Rakeln, Streichen etc. auf Substrate aufgebracht werden. Das in der Klebstoffzubereitung enthaltene Wasser kann durch Trocknung bei umgebungstemperatur oder erhöhter Temperatur z.B. im Bereich von 50 bis 150 °C entfernt werden. Als substrate eignen sich neben Papier und Karton auch Polymerfolien, insbesondere aus Polyethylen, orientiertem Polypropylen, Polyamid, das biaxial oder monoaxial verstreckt sein kann, Polyethylenterephthalat, Polyamid, Polystyrol, Polyvinylchlorid, Polyacetat, Zellglas, mit Metall (z.B. Aluminium) beschichtete (bedampfte) Polymerfolien (kurz: metallisierte Folien) und Metallfolien, z.B. aus Aluminium. Die genannten Folien können auch z.B. mit Druckfarben bedruckt sein. Zur späteren Verwendung kann die mit dem Haftklebotoff beschichtete Seite des Substrats, z.B von Etiketten, mit einem Releasepapier, z.B. mit silikonisiertem Papier abgedeckt werden.

Die im Folgenden angegebenen Beispiele sollen die Erfindung verdeutlichen ohne sie einzuschränken.

### I Herstellungsbeispiele:

### I.1 Vergleichsbeispiel V1:

In einem Polymerisationsreaktor wurden 3,636 g einer Styrolsaat (Durchmesser ca. 30 nm, 33%ig) in 200 g Wasser auf 90 °C unter Rühren erwärmt. Hierzu gab man innerhalb 2 min unter Rühren 10 % (d. h. 6,88 g) einer Lösung von 4,80 g Natriumperoxodisulfat in 64 g Wasser (Initiatorlösung; Konzentration 7 Gew.-%). Nach 5 min startete man Zulauf 1 und gab ihn innerhalb von 270 min in den Polymerisationsreaktor. Zeitgleich mit Zulauf 1 wurde die Zugabe der restlichen 90 % der Initiatorlösung gestartet und innerhalb von 270 min mit konstanter Zulaufgeschwindigkeit in den Polymerisationsreaktor gegeben. Nach Beendigung des Zulaufs 1 wurden zur Desodorierung bei 90 °C unter Rühren zeitgleich 3,5 g einer 70 %igen Lösung von tert.-Butylhydroperoxid in 20,6 g Wasser sowie eine Lösung von 2,4 g Natriumdisulfit in einer Mischung aus 24,8 g Wasser und 1,44 g Aceton zudosiert. Zu der so erhaltenen Mischung gab man bei 90 °C in 15 min 16,8 g einer wässrigen Lösung (50 %ig) eines Sulfobernsteinsäuredioktylesters. Der Feststoffgehalt der Dispersion wurde auf 56 % eingestellt.

**Zulauf 1:**

| | |
|---|---|
| 596,1 g | Wasser |
| 40,0 g | Emulgatorlösung 1 |
| 5,3 g | Emulgatorlösung 2 |
| 24,0 g | einer 10 %igen wässrigen Lösung von Natronlauge |
| 6,5 g | Acrylsäure AS |
| 26,0 g | Hydroxypropylacrylat HPA |
| 104,4 g | Methylmethacrylat MMA |
| 26,0 g | Styrol S |
| 1037,0 g | 2-Ethylhexylacrylat EHE |

| | |
|---|---|
| Emulgatorlösung 1: 30 %ige wässrige Lösung des Natriumsalzes des Schwefelsäurehalbesters von mit 30 Ethylenoxideinheiten ethoxiliertem Dodecanol (Disponil FES77) Emulgatorlösung 2: einer 45 %igen wässrigen Lösung des Natriumsalzes des mit einem C₁₂-C₁₄-Alkylrest und mit zwei Sulfonylresten derivatisierten Diphyenlethers (Dowfax 2A1) | |

### I.2 Erfindungsgemäßes Beispiel E1 "steigender Gradient NaPS":

Die Umsetzung erfolgte in der für Vergleichsbeispiel V1 beschriebenen Weise, wobei 10 % der Initiatorlösung (4,8 g Natriumperoxodisulfat in 187,4 g Wasser) und die übrigen 90 % der Initiatorlösung als Zulauf 2 zeitgleich beginnend mit der Monomerzugabe in 30-Minuten-Intervallen wie folgt dosiert wurden: 2g, 6g, 11g, 15g, 19g, 24g, 28g, 32g, 36g in jeweils 30 min.

### I.3 Erfindungsgemäßes Beispiel E2 "fallender Gradient Acrylsäure, steigender Gradient NaPS":

Die Herstellung erfolgte wie in Beispiel 1 beschrieben, jedoch wurde der Monomerzulauf 1 in einen Zulauf 1 und einen Zulauf 3 aufgeteilt.

**Zulauf 1:**

| | |
|---|---|
| 236,7 g | Wasser |
| 20,0 g | Emulgatorlösung 1 |
| 2,7 g | Emulgatorlösung 2 |
| 12,0 g | einer 10 %igen wässrigen Lösung von Natronlauge |
| 6,5 g | Acrylsäure AS |
| 13.0 g | Hydroxypropylacrylat HPA |
| 52,2 g | Methylmethacrylat MMA |
| 13,0 g | Styrol S |
| 518,5 g | 2-Ethylhexylacrylat EHA |

**Zulauf 3:**

| | |
|---|---|
| 236,0 g | Wasser |
| 20,0 g | Emulgatorlösung 1 |
| 2,7 g | Emulgatorlösung 2 |
| 12,0 g | einer 10 %igen wässrigen Lösung von Natronlauge |
| 13,0 g | Hydroxypropylacrylat HPA |
| 52,2 g | Methylmethacrylat MMA |
| 13,0 g | Styrol S |
| 518,5 g | 2-Ethylhexylacrylat EHA |

Die Zuläufe 1/3 wurden wie folgt dosiert: 184g/11g, 162g/32g, 140g/54g, 119g/75g, 97g/96g, 76g/118g, 54g/139g, 32g/161g, 11g/182g in jeweils 30 Minuten.

Zulauf 2 wie folgt: 2g, 6g, 11g, 15g, 19g, 24g, 28g, 32g, 36g in jeweils 30 min.

### I.4 Vergleichsbeispiel V2 "fallender Gradient Acrylsäure, steigender Gradient Styrol":

Die Herstellung erfolgte wie in Vergleichsbeispiel V1 beschrieben, jedoch wurde der Monomerzulauf 1 in einen Zulauf 1 und einen Zulauf 3 aufgeteilt.

**Zulauf 1:**

| | |
|---|---|
| 295,0 g | Wasser |
| 20,0 g | Emulgatorlösung 1 |
| 2,7 g | Emulgatorlösung 2 |
| 12,0 g | einer 10 %igen wässrigen Lösung von Natronlauge |
| 6,5 g | Acrylsäure AS |
| 13,0 g | Hydroxypropylacrylat HPA |
| 52,2 g | Methylmethacrylat MMA |
| 518,5 g | 2-Ethylhexylacrylat EHA |

**Zulauf 3:**

| | |
|---|---|
| 301,1 g | Wasser |
| 20,0 g | Emulgatorlösung 1 |
| 2,7 g | Emulgatorlösung 2 |
| 2,0 g | einer 10 %igen wässrigen Lösung von Natronlauge |
| 13,0 g | Hydroxypropylacrylat HPA |
| 52,2 g | Methylmethacrylat MMA |
| 26,0 g | Styrol S |
| 518,5 g | 2-Ethylhexylacrylat EHE |

Die Zuläufe 1/3 wurden wie folgt dosiert: 193g/12g, 170g/35g, 148g/58g, 125g/82g, 102g/105g, 79g/128g, 57g/152g, 34g/175g, 11g/198g in jeweils 30 Minuten.

### I.5 Erfindungsgemäßes Beispiel E3 "fallender Gradient Acrylsäure, steigender Gradient S, steigender Gradient NaPS":

Die Herstellung erfolgte wie in Beispiel 1 beschrieben, jedoch wurde der Monomerzulauf 1 in einen Zulauf 1 und einen Zulauf 3 aufgeteilt.

**Zulauf 1:**

| | |
|---|---|
| 235,0 g | Wasser |
| 20,0 g | Emulgatorlösung 1 |
| 2,7 g | Emulgatorlösung 2 |
| 12,0 g | einer 10 %igen wässrigen Lösung von Natronlauge |
| 6,5 g | Acrylsäure AS |
| 13,0 g | Hydroxypropylacrylat HPA |
| 52,2 g | Methylmethacrylat MMA |
| 518,5 g | 2-Ethylhexylacrylat EHA |

**Zulauf 3:**

| | |
|---|---|
| 237,7 g | Wasser |
| 20,0 g | Emulgatorlösung 1 |
| 2,7 g | Emulgatorlösung 2 |
| 12,0 g | einer 10 %igen wässrigen Lösung von Natronlauge |
| 13,0 g | Hydroxypropylacrylat HPA |
| 52,2 g | Methylmethacrylat MMA |
| 26,0 g | Styrol S |
| 518,5 g | 2-Ethylhexylacrylat EHA |

Die Zuläufe 1/3 wurden wie folgt dosiert: 180g/11g, 159g/33g, 138g/54g, 117g/76g, 96g/98g, 74g/120 g, 53g/142g, 32g/163g, 11g/185g in jeweils 30 Minuten.

Zulauf 2 wie folgt: 2g, 6g, 11g, 15g, 19g, 24g, 28g, 32g, 36g in jeweils 30 min.

### I.6 Beispiel E4 "fallender Gradient Acrylsäure, fallender Gradient Styrol, steigender Grandient NaPS":

Die Herstellung erfolgte wie in Beispiel 1 beschrieben, jedoch wurde der Monomerzulauf 1 in einen Zulauf 1 und einen Zulauf 3 aufgeteilt.

**Zulauf 1:**

| | |
|---|---|
| 240,0 g | Wasser |
| 20,0 g | Emulgatorlösung 1 |
| 2,7 g | Emulgatorlösung 2 |
| 12,0 g | einer 10 %igen wässrigen Lösung von Natronlauge |
| 6,5 g | Acrylsäure AS |
| 13,0 g | Hydroxypropylacrylat HPA |
| 52,2 g | Methylmethacrylat MMA |
| 26,0 g | Styrol S |
| 518,5 g | 2-Ethylhexylacrylat EHA |

**Zulauf 3:**

| | |
|---|---|
| 232,7 g | Wasser |
| 20,0 g | Emulgatorlösung 1 |
| 2,7 g | Emulgatorlösung 2 |
| 2,0 g | einer 10 %igen wässrigen Lösung von Natronlauge |
| 13,0 g | Hydroxypropylacrylat HPA |
| 52,2 g | Methylmethacrylat MMA |
| 518,5 g | 2-Ethylhexylacrylat EHA |

Die Zuläufe 1/3 wurden wie folgt dosiert: 187g/11g, 165g/32g, 143g/53g, 121g/74g, 99g/95g, 77g/115g, 55g/136g, 33g/157g, 11g/178g in jeweils 30 Minuten.

Zulauf 2 wie folgt: 2g, 6g, 11g, 15g, 19g, 24g, 28g, 32g, 36g in jeweils 30 min.

### II Anwendungstechnische Prüfung:

### a) Herstellung der Prüfstreifen

Die zu prüfende Dispersion wird mit einer Rakel in dünner Schicht auf ein silikonisiertes Papier aufgetragen und 3 min bei 90 °C getrocknet. Die Spalthöhe der Rakel wird dabei so gewählt, dass sich für den getrockneten Klebstoff eine Auftragsmenge von 19 - 21 g/m² ergibt. Auf den getrockneten Klebstoff wird handelsübliche OPP-Folie (Stärke 30 µ, vorbehandelt) aufgelegt und mit einem Handroller fest angerollt. Das so hergestellte Folienlaminat wird in Streifen von 2,5 cm Breite geschnitten. Diese Streifen werden vor der Prüfung mindestens 24 h im Normklima gelagert.

### b) Prüfung der Scherfestigkeit (K, in Anlehnung an FINAT FTM 7)

Nach Abziehen des silikonisierten Papiers wird der Prüfstreifen so auf den Rand eines Prüfblechs aus Afera verklebt, dass sich eine Verklebungsfläche von 6,25 cm² ergibt. 10 Minuten nach dem Verkleben wird am überstehenden Ende der Folie ein 1000 g-Gewicht befestigt und das Prüfblech senkrecht aufgehängt. Umgebungsbedingungen: 23 °C, 50 % relative Luftfeuchtigkeit. Als Scherfestigkeit wird die Zeit bis zum Versagen der Verklebung unter Einfluss des Gewichts als Mittelwert aus den Ergebnissen von zwei Prüfkörpern in Minuten angegeben.

### c) Prüfung der Schälfestigkeit (in Anlehnung an FINAT FTM 1)

Nach Abziehen des silikonisierten Papiers wird ein 2,5 cm breiter Prüfstreifen auf ein Prüfblech aus Stahl und auf Polyethylen verklebt. Umgebungsbedingungen: 23 °C, 50 % relative Luftfeuchtigkeit. 1 Minute nach der Verklebung wird der Streifen mit Hilfe einer Zugprüfmaschine in einem Winkel von 180° mit einer Geschwindigkeit von 300 mm/min abgezogen. Als Schälfestigkeit wird die dafür im Mittel erforderliche Kraft in N/2,5 cm angegeben.

Zusätzlich wird das Bruchbild beurteilt. Dabei bedeuten: A = adhäsiver Bruch, kein Rückstand auf dem Edelstahlblech K = kohäsiver Bruch (Trennung im Klebstoff)

**Tabelle 1: Klebewerte**

| Nr. | S (Afera) | BB | K | BB |
|---|---|---|---|---|
| V1 | 6,2 | A | 753 | K |
| E1 | 6,5 | A | 1036 | K |
| E2 | 5,5 | A | >7200 | K |
| V2 | 5,6 | A | 942 | K |
| E3 | 5,0 | A | 5496 | K |
| E4 | 5,2 | A | >7200 | K |

| | | | | |
|---|---|---|---|---|
| S (Afera): Schälfestigkeit auf Stahl, sofort, K: Kohäsion in [min] auf Afera, BB: Bruchbild | | | | |

### III Molekulargewichtsverteilung:

Die Molekulargewichtsverteilungen der Polymere der Herstellungsbeispiele wurden mittels Gelpermeationschromatographie (GPC) bestimmt. Die GPC erfolgte an 3 Säulen vom Typ mixed B (1 = 300 mm, d = 7,5 mm, beladen mit PL-gel von Polymer Laboratories), die in Reihe geschaltet waren. Als mobile Phase diente Tetrahydrofuran (analytical grade). Die Proben wurden mit entionisiertem Wasser auf einen Feststoffgehalt von 0,25 Gew.-% verdünnt und bei einer Fliessgeschwindigkeit von 1,0 ml/min bei 21 °C chromatographiert. Die Detektion erfolgte mittels UV-Spektrometrie bei einer Wellenlänge von 254 nm und über den Brechungsindex. Kommerzielle Polystyrol-Standards (Polymer Laboratories, Molekulargewicht 500 - 10.000.000 Dalton) wurden zur Kalibrierung eingesetzt. Die Ergebnisse sind in Tabelle 2 zusammengestellt.

**Tabelle 2:**

| Herstellungsbeispiel Nr. | M̅_{N} [Dalton] | M̅_{W} [Dalton] | M̅_{W}/M̅_{N} [Dalton] |
|---|---|---|---|
| V1 | 4,000 | 141,000 | 35,0 |
| E1 | 5,000 | 181,000 | 36,0 |
| E2 | 4,200 | 187,000 | 44,2 |
| V2 | 4,800 | 153,000 | 31,7 |
| E3 | 4,600 | 176,000 | 38,4 |
| E4 | 3,900 | 181,000 | 46,8 |

## Patentansprüche

1. Verfahren zur Herstellung einer wässrigen Polymerdispersion, eines Copolymerisats CP durch radikalische, wässrige Emulsionspolymerisation der Monomere M, umfassend wenigstens zwei voneinander verschiedene Monomere M1 und M2, in Gegenwart wenigstens eines Initiators, wobei wenigstens 80 % der Monomere M und wenigstens 75 % des Initiators der Polymerisationsreaktion in ihrem Verlauf kontinuierlich zugeführt werden, **dadurch gekennzeichnet, dass** man sowohl die Rate, mit der der Initiator der Polymerisationsreaktion zugeführt wird, als auch das Verhältnis der Monomere M1:M2 in den zugeführten Monomeren M mehrfach oder kontinuierlich während der Polymerisationsreaktion ändert, wobei die Monomere M
- 60 bis 99 Gew.-%, bezogen auf die Gesamtmonomermenge, wenigstens eines hydrophoben Monomeren M1, dessen Homopolymerisat eine Glasübergangstemperatur T_{g} ≦ 0 °C aufweist, und
- 1 bis 40 Gew.-%, bezogen auf die Gesamtmonomermenge, wenigstens eines damit copolymerisierbaren Monomeren M2 umfassen, wobei das Monomer M2
- 0,1 bis 10 Gew.-%, bezogen auf die Gesamtmonomermenge, wenigstens eines Monomers M2a mit einer Löslichkeit in Wasser ≥ 80 g/l (bei 25 °C) und
- 0,9 bis 39,9 Gew.-%, bezogen auf die Gesamtmonomermenge, wenigstens eines hydrophoben Monomers M2b mit einer Glasübergangstemperatur T_{g} > 0 °C umfasst.

2. Verfahren nach Anspruch 1, **dadurch gekennzeichnet, dass** man die Rate, mit der der Initiator der Polymerisationsreaktion zugeführt wird, während der Polymerisationsreaktion steigert.

3. Verfahren nach Anspruch 1 oder 2, **dadurch gekennzeichnet, dass** man die Rate, mit der die Monomere M der Polymerisationsreaktion zugeführt werden, um weniger als 20 %, bezogen auf den Anfangswert, ändert.

4. Verfahren nach einem der vorhergehenden Ansprüche, **dadurch gekennzeichnet, dass** das Monomer M2a wenigstens ein monoethylenisch ungesättigtes Monomer mit einer Säuregruppe umfasst.

5. Verfahren nach einem der vorhergehenden Ansprüche, **dadurch gekennzeichnet, dass** man den Anteil der Monomere M2a in den zugegebenen Monomeren M im Verlauf der Polymerisationsreaktion verringert.

6. Wässrige Polymerdispersion, erhältlich durch ein Verfahren nach einem der Ansprüche 1 bis 5, worin das Copolymer CP
- 60 bis 99 Gew.-% Monomere M1,
- 0,1 bis 10 Gew.-% Monomere M2a und
- 0,9 bis 39,9 Gew.-% Monomere M2b
einpolymerisiert enthält, wobei sich die Gewichtsanteile der Monomere M1, M2a und M2b zu 100 Gew.-% addieren.

7. Wässrige Polymerdispersion nach Anspruch 6, worin die Monomere M2b
- 0,4 bis 20 Gew.-%, wenigstens eines vinylaromatischen Monomers und
- 0,5 bis 35,5 Gew.-%, wenigstens eines C₁-C₄-Alkylesters der Methacrylsäure umfassen.

8. Wässrige Polymerdispersion nach einem der Ansprüche 6 oder 7, worin die Monomere M2a
- 0,05 bis 2 Gew.-% wenigstens eines ethylenisch ungesättigten Monomers mit einer Säuregruppe und
- 0,05 bis 9,95 Gew.-% wenigstens eines neutralen Monomers umfassen.

9. Polymerpulver, erhältlich durch Sprühtrocknung einer wässrigen Polymerdispersion aus einem der Ansprüche 6 bis 8.

10. Verwendung der wässrigen Polymerdispersionen aus einem der Ansprüche 6 bis 8 oder eines Polymerpulvers nach Anspruch 9 zur Herstellung von Haftklebstoffen.

11. Hafklebstoffzubereitung, enthaltend als Klebrohstoff wenigstens eine wässrige Polymerdispersion nach einem der Ansprüche 6 bis 8 oder ein Polymerpulver nach Anspruch 9.

## Claims

1. A process for preparing an aqueous polymer dispersion of a copolymer CP by free-radical aqueous emulsion polymerization of the monomers M, comprising least two different monomers M1 and M2, in the presence of at least one initiator, at least 80% of the monomers M and at least 75% of the initiator being supplied continuously to the polymerization reaction during its course, which comprises changing both the rate at which the initiator is supplied to the polymerization reaction and the ratio of the monomers M1:M2 in the supplied monomers M a number of times, or continuously, during the polymerization reaction, the monomers M comprising
- from 60 to 99% by weight, based on the total monomer amount, of at least one hydrophobic monomer M1 whose homopolymer has a glass transition temperature T_{g} ≤ 0°C, and
- from 1 to 40% by weight, based on the total monomer amount, of at least one monomer M2 copolymerizable therewith, the monomer M2 comprising
- from 0.1 to 10% by weight, based on the total monomer amount, of at least one monomer M2a having a solubility in water ≥ 80 g/l (at 25°C), and
- from 0.9 to 39.9% by weight, based on the total monomer amount, of at least one hydrophobic monomer M2b having a glass transition temperature T_{g} > 0°C.

2. The process according to claim 1, wherein the rate at which the initiator is supplied to the polymerization reaction is raised during the polymerization reaction.

3. The process according to claim 1 or 2, wherein the rate at which the monomers M are supplied to the polymerization reaction changes by less than 20% relative to the initial value.

4. The process according to any of the preceding claims, wherein the monomer M2a comprises at least one monoethylenically unsaturated monomer having an acid group.

5. The process according to any of the preceding claims, wherein the fraction of the monomers M2a in the added monomers M is reduced in the course of the polymerization reaction.

6. An aqueous polymer dispersion obtainable by a process according to any of claims 1 to 5, wherein the copolymer CP comprises in copolymerized form
- from 60 to 99% by weight of monomers M1,
- from 0.1 to 10% by weight of monomers M2a, and
- from 0.9 to 39.9% by weight of monomers M2b, the weight fractions of the monomers M1, M2a and M2b adding up to 100% by weight.

7. The aqueous polymer dispersion according to claim 6, wherein the monomers M2b comprise
- from 0.4 to 20% by weight of at least one vinylaromatic monomer, and
- from 0.5 to 35.5% by weight of at least one C₁-C₄ alkyl ester of methacrylic acid.

8. The aqueous polymer dispersion according to either of claims 6 and 7, wherein the monomers M2a comprise
- from 0.05 to 2% by weight of at least one ethylenically unsaturated monomer having an acid group, and
- from 0.05 to 9.95% by weight of at least one neutral monomer.

9. A polymer powder obtainable by spray drying an aqueous polymer dispersion from any of claims 6 to 8.

10. The use of an aqueous polymer dispersion from any of claims 6 to 8 or of a polymer powder according to claim 9 to produce pressure sensitive adhesives.

11. A pressure sensitive adhesive formulation comprising as adhesive base material at least one aqueous polymer dispersion according to any of claims 6 to 8 or a polymer powder according to claim 9.

## Revendications

1. Procédé pour la préparation d'une dispersion polymère aqueuse, d'un copolymère CP par polymérisation en émulsion aqueuse, par voie radicalaire, des monomères M, comprenant au moins deux monomères M1 et M2 différents l'un de l'autre, en présence d'au moins un initiateur, au moins 80% des monomères M et au moins 75% de l'initiateur étant ajoutés en continu au cours de la réaction de polymérisation, **caractérisé en ce que** tant la vitesse à laquelle l'initiateur est introduit dans la réaction de polymérisation, que le rapport des monomères M1:M2 dans les monomères M alimentés sont modifiés plusieurs fois ou en continu pendant la réaction de polymérisation, les monomères M étant composés de
- 60 à 99% en poids, par rapport à la quantité totale de monomères, d'au moins un monomère M1 hydrophobe, dont l'homopolymère présente une température de transition vitreuse T_{g} ≤ 0°C, et
- 1 à 40% en poids, par rapport à la quantité totale de monomères d'au moins un monomère M2 copolymérisable avec celui-ci, où le monomère M2 comprend
- 0,1 à 10% en poids, par rapport à la quantité totale de monomères, d'au moins un monomère M2a présentant une solubilité dans l'eau ≥ 80 g/l (à 25°C) et
- 0,9 à 39,9% en poids, par rapport à la quantité totale de monomères, d'au moins un monomère M2b hydrophobe présentant une température de transition vitreuse T_{g} > 0°C.

2. Procédé selon la revendication 1, **caractérisé en ce que** la vitesse à laquelle l'initiateur est alimenté dans la réaction de polymérisation est augmentée pendant la réaction de polymérisation.

3. Procédé selon la revendication 1 ou 2, **caractérisé en ce qu'**on modifie la vitesse à laquelle les monomères M sont alimentés dans la réaction à raison de moins de 20% par rapport à la valeur de départ.

4. Procédé selon l'une quelconque des revendications précédentes, **caractérisé en ce que** le monomère M2a comprend au moins un monomère éthyléniquement monoinsaturé présentant un groupe acide.

5. Procédé selon l'une quelconque des revendications précédentes, **caractérisé en ce qu'**on diminue la proportion des monomères M2a dans les monomères M ajoutés au cours de la réaction de polymérisation.

6. Dispersion polymère aqueuse, pouvant être obtenue par un procédé selon l'une quelconque des revendications 1 à 5, dans laquelle le copolymère CP contient, sous forme copolymérisée
- 60 à 99% en poids de monomères M1,
- 0,1 à 10% en poids de monomères M2a et
- 0,9 à 39,9% en poids de monomères M2b
les proportions en poids des monomères M1, M2a et M2b s'ajoutant à 100% en poids.

7. Dispersion polymère aqueuse selon la revendication 6, dans laquelle les monomères M2b sont composés de
- 0,4 à 20% en poids d'au moins un monomère aromatique de vinyle et
- 0,5 à 35,5% en poids, d'au moins un ester de C₁-C₄-alkyle de l'acide méthacrylique.

8. Dispersion polymère aqueuse selon l'une quelconque des revendications 6 ou 7, dans laquelle les monomères M2a sont composés de
- 0,05 à 2% en poids d'au moins un monomère éthyléniquement insaturé comprenant un groupe acide et
- 0,05 à 9,95% en poids d'au moins un monomère neutre.

9. Poudre polymère pouvant être obtenue par séchage par pulvérisation d'une dispersion polymère aqueuse de l'une quelconque des revendications 6 à 8.

10. Utilisation des dispersions aqueuses polymères de l'une quelconque des revendications 6 à 8 ou d'une poudre polymère selon la revendication 9 pour la préparation d'autoadhésifs.

11. Composition autoadhésive contenant comme matière première adhésive au moins une dispersion polymère aqueuse selon l'une quelconque des revendications 6 à 8 ou une poudre polymère selon la revendication 9.
